# EUROPEAN PATENT APPLICATION

(11) **EP 4 672 021 A1**
(43) Date of publication of application: **31.12.2025**
(21) Application number: 24777672.7
(22) Date of filing: 07.03.2024
(51) Int. Cl.: G06F 16/242

(54) **DATA QUERY METHOD AND RELATED DEVICE**

(30) Priority: 29.03.2023 CN 202310361217
(71) Applicant: HUAWEI TECHNOLOGIES CO., LTD., Shenzhen, Guangdong 518129 (CN)
(72) Inventor: ZHOU, Zhaoqi, Shenzhen, Guangdong 518129 (CN); LIU, Baozhu, Shenzhen, Guangdong 518129 (CN)
(74) Representative: Pfenning, Meinig & Partner mbB
(86) International application number: PCT/CN2024/080480
(87) International publication number: WO 2024/198882

(57) **Abstract**

This application provides a data query method and a related apparatus, to resolve a problem that efficiency of a TABLE ACCESS BY INDEX ROWID query based on a global secondary index is low in conventional technologies. In a technical solution provided in this application, GSI data stored on a first data node includes a logical value of a distribution key of base table data. When performing a TABLE ACCESS BY INDEX ROWID query operation, the first data node may directly determine a second data node based on the logical value of the distribution key of the base table data. The second data node is a data node, in a distributed system, that stores base table data meeting a query condition. In the method, a process of calculating the logical value of the distribution key of the base table data in the conventional technologies can be omitted, which improves query efficiency.

## Description

This application claims priority to Chinese Patent Application No. 202310361217.4, filed with the China National Intellectual Property Administration on March 29, 2023 and entitled "DATA QUERY METHOD AND RELATED APPARATUS", which is incorporated herein by reference in its entirety.

### TECHNICAL FIELD

This application relates to the field of distributed database technologies, and in particular, to a data query method and a related apparatus.

### BACKGROUND

A data query method in a distributed database is a TABLE ACCESS BY INDEX ROWID query method based on a global secondary index (global secondary index, GSI).

Currently, in a commonly used TABLE ACCESS BY INDEX ROWID query method, a GSI table includes an index of base table data and a distribution key of the base table data. A base table is a basic table of a database system. After receiving a query request carrying a query condition, a coordinator node queries, on each data node, GSI data whose index column value meets the query condition, calculates, based on a value that is of the distribution key of the base table data and that is recorded in the GSI data, a data node on which the base table data is located, and queries, in a base table on the data node, base table data meeting the query condition.

However, when the TABLE ACCESS BY INDEX ROWID query method is used to query data, query efficiency is low.

### SUMMARY

This application provides a data query method and a related apparatus, to resolve a problem that query efficiency is low when a TABLE ACCESS BY INDEX ROWID query method is used to query data in conventional technologies.

According to a first aspect, this application provides a data query method. The method is applied to a first data node. The method includes: receiving a first instruction from a coordinator node, where the first instruction is used to request to query, in a TABLE ACCESS BY INDEX ROWID query manner, base table data meeting a first query condition; performing a query according to the first instruction to obtain first GSI data, where a first index in the first GSI data meets the first query condition; and sending a second instruction, where the second instruction indicates that the base table data meeting the first query condition is stored on a second data node, and a logical value of a distribution key of the base table data stored on the second data node is equal to a first logical value in the first GSI data.

The first data node may be deployed in a distributed system. In the distributed system, each data node stores GSI data. The GSI data may include a first index and a first logical value. The first index is an index of the base table data, and the first logical value is a logical value of a distribution key of the base table data. The first data node may be a data node that is in the distributed system and that is configured to store the first GSI data.

In the method, the first data node may directly determine the second data node based on the logical value of the distribution key of the base table data. In this way, a process of calculating the logical value of the distribution key of the base table data in conventional technologies can be omitted, which reduces costs of TABLE ACCESS BY INDEX ROWID and improves query efficiency.

In some possible implementations, the logical value of the distribution key of the base table data includes any one of the following: a hash value mapping value of the distribution key of the base table data, a range mapping value of the distribution key of the base table data, and a list mapping value of the distribution key of the base table data.

In the method, the data node stores the logical value of the distribution key of the base table data instead of the distribution key of the base table data. This saves storage space of a data node.

In some possible implementations, sending the second instruction includes: sending the second instruction to the coordinator node.

In the method, after the first data node sends the second instruction to the coordinator node, the coordinator node may determine the second data node according to the second instruction, and then send a third instruction to the second data node. The third instruction is used to request the second data node to query the base table data meeting the first query condition. The second data node determines first base table data according to the third instruction, and sends the first base table data to the coordinator node. The first base table data includes the base table data meeting the first query condition.

The first data node sends the second instruction to the coordinator node, so that the second data node may not need to receive the first GSI data, thereby saving storage space of the second data node.

Optionally, when sending the second instruction to the coordinator node, the first data node may further send the first GSI data to the coordinator node. The first GSI data may include location information of the base table data or a partition key of the base table data. In this way, the coordinator node may determine, based on the location information, a storage location of base table data that corresponds to the first GSI data. The coordinator node may determine a storage unit of the base table data based on the partition key of the base table data. When sending the third instruction to the second data node, the coordinator node may carry the information. This reduces time for querying the base table data, and helps improve query efficiency.

Optionally, the first data node may send the location information of the base table data in the first GSI data or the partition key of the base table data in the first GSI data to the coordinator node. That is, the first data node may not send the logical value of the distribution key of the base table data to the coordinator node. This helps reduce costs of transmission between the first data node and the coordinator node.

In some possible implementations, sending the second instruction includes: sending the second instruction to the second data node.

In the method, after the first data node sends the second instruction to the second data node, the second data node may determine first base table data based on the first query condition, and send the first base table data to the coordinator node. The first base table data includes data required by a user.

The first data node sends the second instruction to the second data node, which can reduce a requirement for communication between the first data node and the coordinator node, and avoid a problem that storage space or a calculation capability of the coordinator node is insufficient when the coordinator node receives too many second instructions.

Optionally, when sending the second instruction to the second data node, the first data node may further send the first GSI data to the second data node. The first GSI data may include location information of the base table data or a partition key of the base table data. In this way, the second data node may determine, based on the location information, a storage location of base table data that corresponds to the first GSI data. The second data node may determine a storage unit of the base table data based on the partition key of the base table data. This can reduce time for querying the base table data, and helps improve query efficiency.

Optionally, the first data node may send the location information of the base table data in the first GSI data or the partition key of the base table data in the first GSI data to the second data node. In this way, the first data node may not send the logical value of the distribution key of the base table data to the second data node. This helps reduce costs of transmission between the first data node and the second data node.

In some possible implementations, the first data node may send the first GSI data to the coordinator node. Correspondingly, the coordinator node may determine the second data node based on the logical value that is of the distribution key of the base table data and that is in the first GSI data, and further send the third instruction to the second data node.

In the method, a process of calculating the logical value of the distribution key of the base table data based on the distribution key of the base table data can be omitted for the coordinator node. This helps the coordinator node quickly determine the second data node, thereby improving query efficiency.

In addition, the first data node sends the first GSI data to the coordinator node, so that the coordinator node may not receive the second instruction, thereby saving storage space of the coordinator node.

Optionally, if the first GSI data also includes a part of data required by the user, the first data node may send the part of data to the coordinator node.

In some possible implementations, the GSI data further includes a second logical value. The second logical value is a logical value of a partition key of the base table data. The logical value of the partition key of the base table data includes any one of the following: a hash value mapping value of the partition key of the base table data, a range mapping value of the partition key of the base table data, and a list mapping value of the partition key of the base table data. The logical value of the partition key of the base table data stored on the second data node is equal to a second logical value in the first GSI data.

In the method, the first data node may determine, based on the second logical value, which storage unit that is on the second data node and in which the base table data is stored. This helps improve efficiency of determining the first base table data by the second data node, and further improve efficiency of a TABLE ACCESS BY INDEX ROWID query.

According to a second aspect, this application provides a data query method. The method is applied to a coordinator node. The method includes: sending a first instruction to at least one data node, where each of the at least one data node stores global secondary index GSI data, the GSI data includes a first index and a first logical value, the first index is an index of base table data, the first logical value is a logical value of a distribution key of the base table data, and the first instruction is used to request to query, in a TABLE ACCESS BY INDEX ROWID query manner, base table data meeting a first query condition; and receiving a second instruction from a first data node of the at least one data node, where the second instruction indicates that the base table data meeting the first query condition is stored on a second data node, and a logical value of a distribution key of the base table data stored on the second data node is equal to a first logical value in first GSI data.

In some possible implementations, the logical value of the distribution key of the base table data includes any one of the following: a hash value mapping value of the distribution key of the base table data, a range mapping value of the distribution key of the base table data, and a list mapping value of the distribution key of the base table data.

In some possible implementations, the GSI data further includes a second logical value. The second logical value is a logical value of a partition key of the base table data. The logical value of the partition key of the base table data includes any one of the following: a hash value mapping value of the partition key of the base table data, a range mapping value of the partition key of the base table data, and a list mapping value of the partition key of the base table data. The logical value of the partition key of the base table data stored on the second data node is equal to a second logical value in the first GSI data.

According to a third aspect, this application provides a data query apparatus, including a module or a unit configured to implement the method in the first aspect and any one of the possible implementations of the first aspect. It should be understood that each module or unit may implement a corresponding function by executing a computer program.

For example, the data query apparatus may include a receiving module, a query module, and a sending module.

The receiving module may be configured to receive a first instruction. The first instruction is used to request to query, in a TABLE ACCESS BY INDEX ROWID query manner, base table data meeting a first query condition.

The query module may be configured to perform a query according to the first instruction to obtain first GSI data. A first index in the first GSI data meets the first query condition.

The sending module may be configured to send a second instruction. The second instruction indicates that the base table data meeting the first query condition is stored on a second data node. A logical value of a distribution key of the base table data stored on the second data node is equal to a first logical value in the first GSI data.

In some possible implementations, the logical value of the distribution key of the base table data includes any one of the following: a hash value mapping value of the distribution key of the base table data, a range mapping value of the distribution key of the base table data, and a list mapping value of the distribution key of the base table data.

In some possible implementations, when receiving the first instruction, the receiving module may be specifically configured to receive the first instruction from a coordinator node.

When sending the second instruction, the sending module may be specifically configured to send the second instruction to the second data node or the coordinator node.

In some possible implementations, the GSI data further includes a second logical value. The second logical value is a logical value of a partition key of the base table data. The logical value of the partition key of the base table data includes any one of the following: a hash value mapping value of the partition key of the base table data, a range mapping value of the partition key of the base table data, and a list mapping value of the partition key of the base table data. The logical value of the partition key of the base table data stored on the second data node is equal to a second logical value in the first GSI data.

According to a fourth aspect, this application provides a data query apparatus, including a module or a unit configured to implement the method in the second aspect and any one of the possible implementations of the second aspect. It should be understood that each module or unit may implement a corresponding function by executing a computer program.

For example, the data query apparatus may include a sending module and a receiving module.

The sending module may be configured to send a first instruction to at least one data node. Each first data node of the at least one data node stores global secondary index GSI data. The GSI data includes a first index and a first logical value. The first index is an index of base table data, and the first logical value is a logical value of a distribution key of the base table data. The first instruction is used to request to query, in a TABLE ACCESS BY INDEX ROWID query manner, base table data meeting a first query condition.

The receiving module may be configured to receive a second instruction from a first data node of the at least one data node. The second instruction indicates that the base table data meeting the first query condition is stored on a second data node. A logical value of a distribution key of the base table data stored on the second data node is equal to a first logical value in first GSI data.

In some possible implementations, the logical value of the distribution key of the base table data includes any one of the following: a hash value mapping value of the distribution key of the base table data, a range mapping value of the distribution key of the base table data, and a list mapping value of the distribution key of the base table data.

In some possible implementations, the GSI data further includes a second logical value. The second logical value is a logical value of a partition key of the base table data. The logical value of the partition key of the base table data includes any one of the following: a hash value mapping value of the partition key of the base table data, a range mapping value of the partition key of the base table data, and a list mapping value of the partition key of the base table data. The logical value of the partition key of the base table data stored on the second data node is equal to a second logical value in the first GSI data.

According to a fifth aspect, this application provides a data query apparatus, including a processor. The processor is configured to perform the method in any one of the possible implementations of the first aspect or the second aspect.

The apparatus may further include a memory, configured to store instructions and data. The memory is coupled to the processor. When executing the instructions stored in the memory, the processor can implement the method described in the foregoing aspects. The apparatus may further include a communication interface. The communication interface is used by the apparatus to communicate with another device. For example, the communication interface may be a transceiver, a circuit, a bus, a module, or another type of communication interface.

According to a sixth aspect, this application provides a communication system. The communication system includes a data node and a coordinator node. The data node may be configured to implement the method according to any one of the possible implementations of the first aspect, and the coordinator node may be configured to implement the method according to any one of the possible implementations of the second aspect.

According to a seventh aspect, this application provides a computer-readable storage medium. The computer-readable storage medium stores program code to be executed by a data query apparatus, and the program code includes instructions for implementing the method in the first aspect or the second aspect.

According to an eighth aspect, this application provides a computer program product including instructions. When the computer program product runs on a data query apparatus, the data query apparatus is enabled to perform the method in the first aspect or the second aspect.

It may be understood that for effects that can be obtained in the second aspect to the eighth aspect, refer to the descriptions in the first aspect. Details are not described herein.

### BRIEF DESCRIPTION OF DRAWINGS

FIG. 1 is a diagram of an architecture of a distributed system to which an embodiment of this application is applicable;
FIG. 2 shows an example of a storage manner of base table data and GSI data according to an embodiment of this application;
FIG. 3 is a diagram of a data query method according to an embodiment of this application;
FIG. 4 is a diagram of a data query method according to another embodiment of this application;
FIG. 5 is a diagram of a data query method according to still another embodiment of this application;
FIG. 6 is a diagram of a data query method according to yet another embodiment of this application;
FIG. 7 is a diagram of a data query method according to still yet another embodiment of this application;
FIG. 8 is a diagram of a data query method according to a further embodiment of this application;
FIG. 9 is a diagram of a data query method according to a still further embodiment of this application;
FIG. 10 is a diagram of a structure of a data query apparatus according to an embodiment of this application;
FIG. 11 is a diagram of a structure of a data query apparatus according to another embodiment of this application; and
FIG. 12 is a diagram of a structure of a data query apparatus according to still another embodiment of this application.

### DESCRIPTION OF EMBODIMENTS

The following describes the technical solutions in embodiments of this application with reference to the accompanying drawings in embodiments of this application.

To clearly describe the technical solutions in embodiments of this application, words such as "first" and "second" are used in embodiments of this application to distinguish between same items or similar items that provide basically same functions or purposes. For example, first information and second information are merely used to distinguish between different information, and do not limit a sequence of the first information and the second information. A person skilled in the art may understand that the words such as "first" and "second" do not limit a quantity or an execution sequence, and the words such as "first" and "second" do not indicate a definite difference.

In embodiments of this application, "at least one" means one or more, and "plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c each may be singular or plural.

For ease of understanding a data query method provided in embodiments of this application, the following describes a system architecture and an application scenario for the data query method provided in embodiments of this application. It may be understood that the system architecture and the application scenario described in embodiments of this application are intended to describe the technical solutions in embodiments of this application more clearly, and do not constitute a limitation on the technical solutions provided in embodiments of this application.

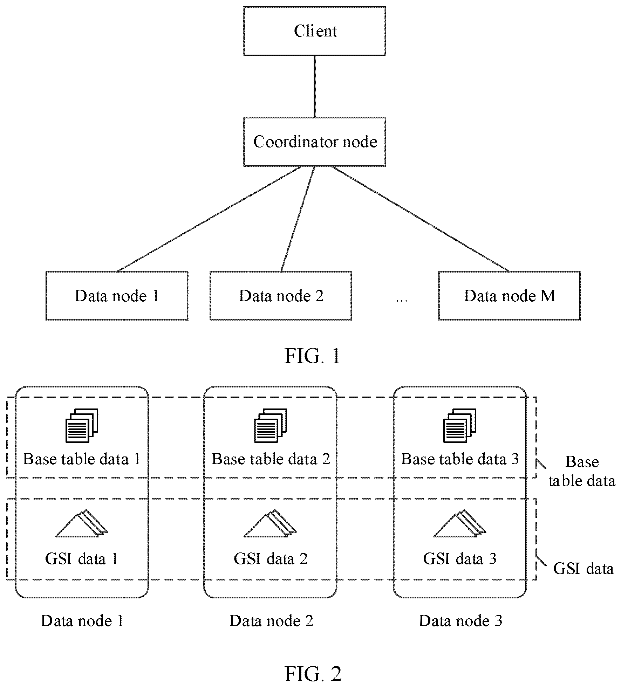

FIG. 1 is a diagram of an architecture of a distributed system to which an embodiment of this application is applicable. As shown in FIG. 1, the distributed system may include a client, a coordinator node (coordinator node, CN), and M data nodes (data node, DN), where M is a positive integer. The client and the coordinator node may communicate with each other, and the coordinator node and each data node may communicate with each other.

The client may be configured to receive an instruction entered by a user, and send the instruction to the coordinator node. For example, the instruction entered by the user into the client may include a storage instruction, a modification instruction, an addition/deletion instruction, a query instruction, or the like. In this embodiment, the distributed system may include at least one client.

The coordinator node may be configured to receive a user request from the client, parse the user request, and perform a corresponding operation, or send indication information to the data node, so that the data node can perform a corresponding operation based on the indication information. Optionally, the coordinator node may further receive data obtained by the data node based on the indication information, and return the data to the client.

In an example, when the user request is to store data, the coordinator node may store the data on the data node based on the request.

The data may include a plurality of groups of base table data, and the base table data is a base table in a database. For any group of base table data, the base table data may include a distribution key. The coordinator node may store, based on the distribution key corresponding to the base table data, the base table data on a data node corresponding to the distribution key.

In addition, an index may be further created for a column in the base table data. That is, each group of base table data may further correspond to a group of index data. For any group of index data, the index data may also correspond to a distribution key of the index data. The coordinator node may store, based on the distribution key corresponding to the index data, the index data on a data node corresponding to the distribution key.

In this embodiment, an index distributed on a different data node from the base table may be referred to as a GSI. Correspondingly, the index data may also be referred to as GSI data.

In an example, a manner of storing the base table data and the GSI data may be shown in FIG. 2. In this example, the distributed system may include three data nodes: a data node 1, a data node 2, and a data node 3. The data node 1 may store base table data 1 and GSI data 1, the data node 2 may store base table data 2 and GSI data 2, and the data node 3 may store base table data 3 and GSI data 3.

Each group of base table data and GSI data that corresponds to the base table data may be distributed on a same data node, or may be distributed on different data nodes.

It may be understood that FIG. 2 is merely a simple example, and does not limit a quantity of data nodes and a data storage manner in this application. In actual application, base table data stored on any data node may be a group of, a plurality of groups of, or zero groups of base table data, and GSI data stored on any data node may also be a group of, a plurality of groups of, or zero groups of GSI data.

Distribution of the base table data and the GSI data on the data node is not required. Available distribution manners include a hash (hash) distribution manner, a range (range) distribution manner, a list (list) distribution manner, and the like.

For example, for data distributed based on a hash, a data node corresponding to the data may be determined and calculated based on a hash value mapping value of a distribution key of the data. For data distributed based on a range, a data node corresponding to the data may be directly determined based on a range mapping value of a distribution key of the data. For data distributed based on a list, a data node corresponding to the data may be directly determined based on a list mapping value of a distribution key of the data.

Optionally, for any group of base table data, the base table data may be further partitioned and stored on the data node. The partitions of the base table data on the data node are not required. Available partitioning manners include a hash partitioning manner, a range partitioning manner, a list partitioning manner, and the like. Correspondingly, each group of base table data may correspond to a partition key, and the GSI data may include a logical value of the partition key of the base table data. After determining a data node corresponding to base table data, the coordinator node may further store, based on a partition key corresponding to the base table data, the base table data in a storage unit corresponding to the partition key.

For example, for data in the hash partitioning manner, a storage unit corresponding to the data may be determined and calculated based on a hash value of a partition key of the base table data. For base table data distributed based on a range, a storage unit corresponding to the data may be directly determined based on a range of the data. For base table data distributed based on a list, a storage unit corresponding to the data may be directly determined based on a list mapping value of the data.

The coordinator node may further send a first mapping relationship of the base table data to each data node. The first mapping relationship indicates a distribution logic between the base table data and the data node.

For example, for base table data distributed based on a hash, the first mapping relationship of the base table data may include a mapping relationship between each hash value mapping value and a data node that corresponds to each hash value mapping value. For base table data distributed based on a range, the first mapping relationship of the base table data may include a mapping relationship between each range mapping value and a data node that corresponds to each range mapping value. For base table data distributed based on a list, the first mapping relationship of the base table data may include a mapping relationship between each list mapping value and a data node that corresponds to each list mapping value.

Optionally, the coordinator node may further send a second mapping relationship of the base table data to each data node. The second mapping relationship indicates a partitioning logic between the base table data and a storage unit on the data node.

For example, for base table data in the hash partitioning manner, the second mapping relationship of the base table data may include a mapping relationship between each hash value mapping value and a storage unit on a data node that corresponds to each hash value mapping value. For base table data in the range partitioning manner, the second mapping relationship of the base table data may include a mapping relationship between each range mapping value and a storage unit on a data node that corresponds to each range mapping value. For base table data in the list partitioning manner, the mapping relationship of the base table data may include a mapping relationship between each list mapping value and a storage unit on a data node that corresponds to each list mapping value.

In some embodiments, the GSI data may include the partition key of the base table data.

In this embodiment, the distribution manner and the partitioning manner of the base table data are independent of each other, and the distribution manner and the partitioning manner may be used in combination.

It should be understood that data included in the base table data and the GSI data is merely an example, and ranges of the base table data and the GSI data are not limited.

In another example, when the user request is to query data, the coordinator node may send indication information to the data node according to the instruction. The indication information may include a query condition and a query manner.

In this embodiment, the coordinator node may be a server having a control function. Optionally, the coordinator node may alternatively be a controller, or a chip used in a controller.

In this embodiment, the distributed system may include one or more coordinator nodes. When the distributed system includes one coordinator node, the client may be connected to any one of the plurality of coordinator nodes. Any two of the plurality of coordinator nodes may communicate with each other.

The data node may be configured to store data, receive the indication information from the coordinator node, and perform a corresponding operation based on the query condition in the indication information. In this embodiment, any two data nodes may also communicate with each other.

In this embodiment, a database parser, an optimizer, and an executor may be deployed on the coordinator node and the data node. The database parser may be configured to convert a user request into an executable instruction, the optimizer is configured to determine a query manner based on a query condition, and the executor is configured to execute a command according to an instruction.

In this embodiment, the data node may perform a query from stored base table data based on the query condition, or may perform a query from stored GSI data based on the query condition. In some scenarios, when performing the query from the stored GSI data, if the data node cannot find all data required by the user, the data node needs to perform a TABLE ACCESS BY INDEX ROWID query to query data other than index data from the base table.

For example, it is assumed that the base table includes five columns of data: a cl column to a c5 column, the distribution key is the column c1, and an index (that is, a GSI) is created on the column c2. If it is expected to obtain values of the columns c2 and c3 through a query, and a conditional screening operation is performed on the column c2, the query may be first performed on the index to obtain, through screening, a value that meets a screening condition of the column c2, and the TABLE ACCESS BY INDEX ROWID query is further performed to obtain the values of the columns c2 and c3.

Currently, in a commonly used TABLE ACCESS BY INDEX ROWID query method, a GSI table includes an index of the base table data and a distribution key of the base table data, and the base table includes the distribution key of the base table data. After receiving a query request carrying a query condition, the coordinator node queries, on each data node, GSI data whose index column value meets the query condition, calculates, based on a value that is of the distribution key of the base table data and that is recorded in the GSI data, a data node on which the base table data is located, and queries, in a base table on the data node, base table data meeting the query condition.

However, when the TABLE ACCESS BY INDEX ROWID query method is used to query data, a problem of low query efficiency often occurs.

The inventor finds through research that a reason for low query efficiency in an existing TABLE ACCESS BY INDEX ROWID query method is as follows: After determining the GSI data, the data node needs to first perform calculation on a value that is of a distribution key of the base table data and that is recorded in the GSI data, to obtain a logical value of the distribution value, and then determine, based on the logical value of the distribution key, the data node on which the base table data is located. This increases time of TABLE ACCESS BY INDEX ROWID, and affects efficiency of TABLE ACCESS BY INDEX ROWID, which reduces query efficiency.

Therefore, this application provides a data query method and a related apparatus, to resolve the problem of low query efficiency in conventional technologies.

In the technical solutions of this application, GSI data includes a logical value of a distribution key of base table data, but does not include a value of the distribution key of the base table data. A first data node may directly determine a second data node based on the logical value of the distribution key of the base table data. In this way, a process of calculating the logical value of the distribution key of the base table data in conventional technologies can be omitted, which reduces costs of TABLE ACCESS BY INDEX ROWID and improves query efficiency.

The logical value of the distribution key of the base table data may be obtained in a distribution manner of the base table data. For example, for base table data distributed based on a hash, a logical value of a distribution key of the base table data is a hash value mapping value of the distribution key of the base table data. For base table data distributed based on a range, a logical value of a distribution key of the base table data is a range of the distribution key of the base table data. For base table data distributed based on a list, a logical value of a distribution key of the base table data is a list mapping value of the distribution key of the base table data.

Optionally, the GSI data may further include a logical value of a partition key of the base table data. The first data node may directly determine a storage unit on the second data node based on the logical value of the partition key of the base table data. This helps improve efficiency of a TABLE ACCESS BY INDEX ROWID query.

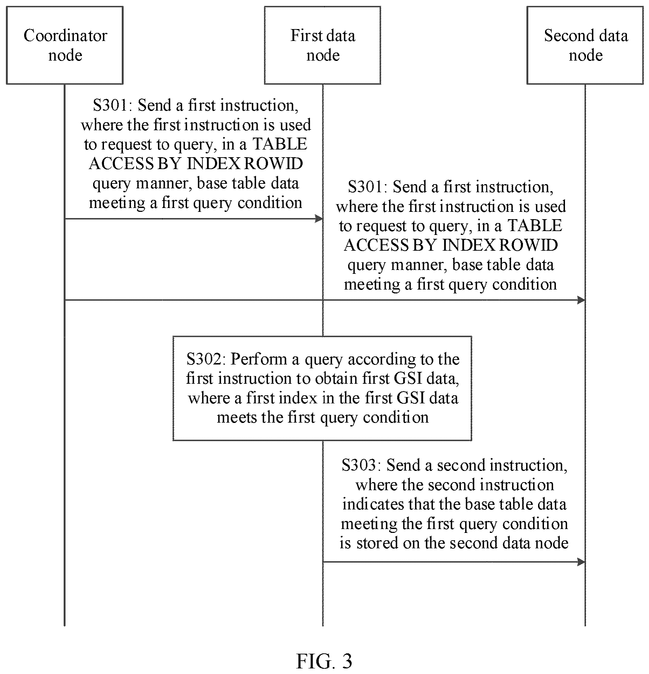

Next, in this application, the solutions of this application are described in detail with reference to FIG. 3 to FIG. 11.

FIG. 3 is a diagram of a data query method according to an embodiment of this application. As shown in FIG. 3, the data query method may include S301 to S303.

S301: A coordinator node sends a first instruction to at least one data node, where the first instruction is used to request to query, in a TABLE ACCESS BY INDEX ROWID query manner, base table data meeting a first query condition. Correspondingly, the at least one data node receives the first instruction.

In this embodiment, the coordinator node may be the coordinator node in the distributed system shown in FIG. 1. In the distributed system, each of the at least one data node stores GSI data. The GSI data may include a first index and a first logical value. The first index is an index of the base table data, and the first logical value is a logical value of a distribution key of the base table data.

In this embodiment, the at least one data node may include a first data node and a second data node.

In the at least one data node, a data node whose GSI data meets the first query condition may be referred to as the first data node, and there may be one or more first data nodes.

In the at least one data node, a data node whose base table data meets the first query condition may be referred to as the second data node, and there may be one or more second data nodes.

Optionally, before sending the first instruction to the at least one data node, the coordinator node may receive a user query request from a client. The user query request may be a request entered by a user into the client. In an example, the user query request may include a query instruction.

After receiving the query instruction, the coordinator node may first determine, according to the query instruction, whether to use the TABLE ACCESS BY INDEX ROWID query manner, and send the first instruction to the first data node when determining to use the TABLE ACCESS BY INDEX ROWID query manner.

In some possible implementations, a method in which the coordinator node determines whether to use the TABLE ACCESS BY INDEX ROWID query may include: Whether a GSI is created on a base table is first determined, and if the GSI is created on the base table, a query is performed based on the GSI. Then, whether the GSI data includes all data required by the user is determined, and if the GSI data does not include all data required by the user, the TABLE ACCESS BY INDEX ROWID query is used.

Optionally, the coordinator node may further calculate costs of the TABLE ACCESS BY INDEX ROWID query. If the costs of the TABLE ACCESS BY INDEX ROWID query are low, the coordinator node determines to perform the query in the TABLE ACCESS BY INDEX ROWID query manner. If the costs of the TABLE ACCESS BY INDEX ROWID query are high, the coordinator node determines to perform the query in another query manner, for example, directly perform the query by using the base table.

The step of determining whether to use the TABLE ACCESS BY INDEX ROWID query may be performed by an optimizer on the coordinator node.

Optionally, after receiving the query instruction, the coordinator node may further parse the query instruction, to obtain the first query condition and the data required by the user. The step of parsing the query instruction may be performed by a database parser on the coordinator node.

S302: The first data node of the at least one data node performs a query according to the first instruction to obtain first GSI data, where a first index in the first GSI data meets the first query condition.

In this embodiment, the first GSI data may include the logical value of the distribution key of the base table data.

Optionally, the first data node may determine the second data node based on the logical value that is of the distribution key of the base table data and that is in the first GSI data. The second data node stores base table data corresponding to the first GSI data.

In an example, the base table data may be distributed and stored on the second data node in a hash value manner, and the logical value of the distribution key of the base table data is a hash value mapping value of the distribution key of the base table data.

In another example, the base table data may be distributed and stored on the second data node in a range manner, and the logical value of the distribution key of the base table data is a range mapping value of the distribution key of the base table data.

In still another example, the base table data may be distributed and stored on the second data node in a list mapping manner, and the logical value of the distribution key of the base table data is a list mapping value of the distribution key of the base table data.

Optionally, the first GSI data may further include location information of the base table data. The location information indicates a storage location, of the base table data corresponding to the first GSI data, on the second data node.

For example, a storage manner of the base table data on the second data node may be represented in a form of a tuple. For example, if it is assumed that the base table data is stored in a second offset of a first data page on the second data node, the location information of the base table data may be (1, 2).

Optionally, the first GSI data may further include a logical value of a partition key of the base table data. The first data node may determine a target storage unit on the second data node based on the logical value of the partition key. The target storage unit is a storage unit that is on the second data node and that is configured to store the base table data corresponding to the first GSI data.

In an example, the base table data may be partitioned and stored in the storage unit on the second data node in a hash value manner, and the logical value of the partition key of the base table data is a hash value mapping value of the partition key of the base table data.

In another example, the base table data may be partitioned and stored in the storage unit on the second data node in a range manner, and the logical value of the partition key of the base table data is a range mapping value of the partition key of the base table data.

In still another example, the base table data may be partitioned and stored on the second data node in a list mapping manner, and the logical value of the partition key of the base table data is a list mapping value of the partition key of the base table data.

S303: The first data node sends a second instruction to the second data node, where the second instruction indicates that the base table data meeting the first query condition is stored on the second data node, and the logical value of the distribution key of the base table data stored on the second data node is equal to a first logical value in the first GSI data. Correspondingly, the second data node receives the second instruction.

In this embodiment, after receiving the second instruction, the second data node may determine first base table data based on the first query condition, and send the first base table data to the coordinator node. The first base table data includes data required by a user.

In the method, a process of calculating the logical value of the distribution key of the base table data based on the distribution key of the base table data can be omitted for the first data node. This helps the first data node quickly determine the second data node, thereby improving query efficiency.

In addition, the first data node sends the second instruction to the second data node, which can reduce a requirement for communication between the first data node and the coordinator node, and avoid a problem that storage space or a calculation capability of the coordinator node is insufficient when the coordinator node receives too many second instructions.

Optionally, when sending the second instruction to the second data node, the first data node may further send the first GSI data to the second data node. The first GSI data may include the location information of the base table data or the logical value of the partition key of the base table data. In this way, the second data node may determine, based on the location information, a storage location of base table data that corresponds to the first GSI data. The second data node may determine a storage unit of the base table data based on the logical value of the partition key of the base table data. This can reduce time for querying the base table data, and helps improve query efficiency.

Optionally, the first data node may send the location information of the base table data in the first GSI data or the logical value of the partition key of the base table data in the first GSI data to the second data node. That is, the first data node may not send the logical value of the distribution key of the base table data to the second data node. This helps reduce costs of transmission between the first data node and the second data node.

Optionally, after obtaining the first GSI data, the first data node may further directly send the first GSI data to the second data node.

In this embodiment, the coordinator node may send the first instruction to the at least one data node. However, the first data node that sends the second instruction to the second data node may be all data nodes of the at least one data node, or may be a part of data nodes of the at least one data node.

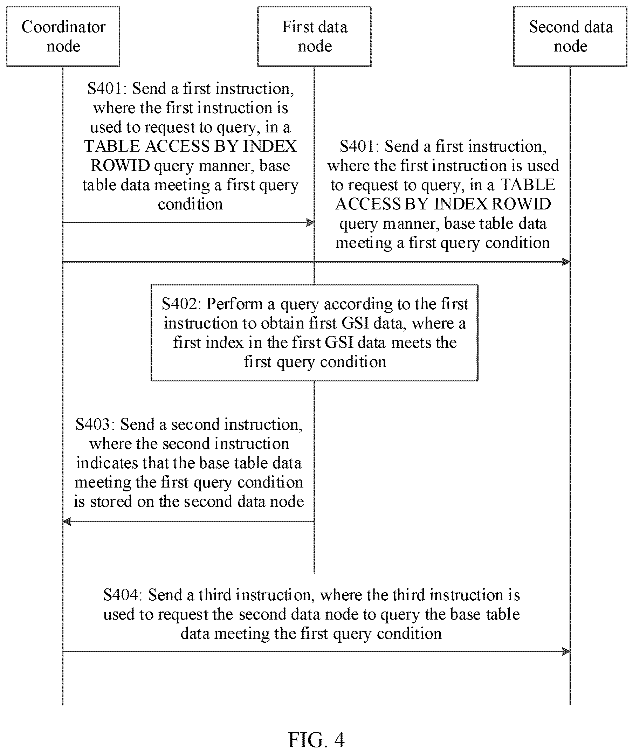

FIG. 4 is a diagram of a data query method according to another embodiment of this application. As shown in FIG. 4, the data query method may include S401 to S404.

S401: A coordinator node sends a first instruction to at least one data node, where the first instruction is used to request to query, in a TABLE ACCESS BY INDEX ROWID query manner, base table data meeting a first query condition. Correspondingly, the at least one data node receives the first instruction.

In this embodiment, for S401, refer to related steps in the embodiment shown in FIG. 3. Details are not described herein again.

S402: The first data node of the at least one data node performs a query according to the first instruction to obtain first GSI data, where a first index in the first GSI data meets the first query condition.

In this embodiment, for S402, refer to related steps in the embodiment shown in FIG. 3. Details are not described herein again.

S403: The first data node sends a second instruction to the coordinator node, where the second instruction indicates that the base table data meeting the first query condition is stored on the second data node, and the logical value of the distribution key of the base table data stored on the second data node is equal to a first logical value in the first GSI data. Correspondingly, the coordinator node receives the second instruction.

S404: The coordinator node sends a third instruction to the second data node, where the third instruction is used to request the second data node to query the base table data meeting the first query condition. Correspondingly, the second data node receives the third instruction.

In this embodiment, the second data node determines first base table data according to the third instruction, and sends the first base table data to the coordinator node. The first base table data includes the base table data meeting the first query condition.

In the method, a process of calculating the logical value of the distribution key of the base table data based on the distribution key of the base table data can be omitted for the first data node. This helps the first data node quickly determine the second data node, thereby improving query efficiency.

Optionally, when sending the second instruction to the coordinator node, the first data node may further send the first GSI data to the coordinator node. The first GSI data may include the location information of the base table data or the logical value of the partition key of the base table data. In this way, the coordinator node may determine, based on the location information, a storage location of base table data that corresponds to the first GSI data. The coordinator node may determine a storage unit of the base table data based on the logical value of the partition key of the base table data. When sending the third instruction to the second data node, the coordinator node may carry the information. This reduces time for querying the base table data, and helps improve query efficiency.

Optionally, the first data node may send the location information of the base table data in the first GSI data or the logical value of the partition key of the base table data in the first GSI data to the coordinator node. That is, the first data node may not send the logical value of the distribution key of the base table data to the coordinator node. This helps reduce costs of transmission between the first data node and the coordinator node.

Optionally, after obtaining the first GSI data, the first data node may further directly send the first GSI data to the coordinator node. Correspondingly, the coordinator node may determine the second data node based on the logical value that is of the distribution key of the base table data and that is in the first GSI data, and further send the third instruction to the second data node.

In the method, a process of calculating the logical value of the distribution key of the base table data based on the distribution key of the base table data can be omitted for the coordinator node. This helps the coordinator node quickly determine the second data node, thereby improving query efficiency.

Optionally, if the first GSI data also includes a part of data required by the user, the first data node may send the part of data to the coordinator node.

In this embodiment, the coordinator node may send the first instruction to the at least one data node. However, the first data node that sends the second instruction to the coordinator node may be all data nodes of the at least one data node, or may be a part of data nodes of the at least one data node.

In this application, there may be a plurality of distribution manners for the base table data. Optionally, the base table data may be further partitioned and stored, and there may also be a plurality of partitioning manners for the base table data. Next, in this application, the solutions of this application are further described in combination with the distribution manners and the partitioning manners of the base table data.

In the following embodiments, this application is described by using an example in which a first data node sends a second instruction to a second data node. A case in which the first data node sends the second instruction to a coordinator node may be similar.

In a first example, the distribution manner of the base table data is a hash distribution manner, and the base table data is not partitioned.

It is assumed that Table 1 is a base table t1. The base table t1 may include data in columns a, b, and c. The column a represents a distribution key of the base table data.

**Table 1: Data and a basic structure of the base table t1**

| a | b | c |
|---|---|---|
| 1 | 2 | 3 |
| 2 | 3 | 4 |

A GSI (which may be referred to as GSI-t1) is created in the column b of the base table t1, and data and a structure of the GSI-t1 may be described in Table 2.

**Table 2: Data and a basic structure of the GSI-t1**

| b | Hash value | Location information | Transaction information 1 | Transaction information 2 |
|---|---|---|---|---|
| 3 | hash(2) | (1, 1) | 100 | 0 |
| 2 | hash(1) | (1, 2) | 100 | 0 |

In Table 2, the column b may be an index key of the GSI-t1 and a distribution key of the GSI-t1, and the hash value may be a logical value of the distribution key of the base table data corresponding to the GSI-t1 data. The location information indicates a location of the base table data on a corresponding data node.

In this embodiment, data in the base table t1 may be distributed to each data node based on the hash value of the distribution key of the base table data. For example, base table data (1, 2, 3) may be distributed to a data node 1, and base table data (2, 3, 4) may be distributed to a data node 2.

The GSI-t1 data may be distributed to each data node based on the hash value of the distribution key of the GSI data. For example, GSI-t1 data (3, hash(2), (1, 1), 100, 0) may be distributed to the data node 1, and GSI-t1 data (2, hash(1), (1, 2), 100, 0) may be distributed to the data node 2.

It may be understood that Table 1 and Table 2 are merely two simple examples. In actual application, the distribution key of the base table data in the base table t1 may be a character string or any other data type that can be used to calculate the hash value.

It is assumed that the query instruction entered by the user into the client is SELECT c FROM t1 WHERE b = 2, and the coordinator node may determine, according to the query instruction, to use the TABLE ACCESS BY INDEX ROWID query. The coordinator node may further determine, according to the query instruction, that a data node meeting the first query condition is the data node 2. The first query condition is b = 2, and the data required by the user is data with b = 2 in the column c in the base table data.

In this example, the data node 2 may be equivalent to the first data node in the embodiment in FIG. 3 or FIG. 4, and the data node 1 may be equivalent to the second data node in the embodiment in FIG. 3 or FIG. 4.

In this example, the first GSI data may include hash(1) and (1, 2). The data node 2 may determine, based on hash(1), that the base table data meeting b = 2 is stored on the data node 1, and the data node 2 may determine, based on (1, 2), a storage location that is of the base table data meeting b = 2 and that is on the data node 1.

In this example, the data node 2 may send the second instruction to the data node 1. After receiving the second instruction, the data node 1 may determine the first base table data according to the second instruction, and send the first base table data to the coordinator node. The first base table data includes the data required by the user.

In this example, the first base table data is 3.

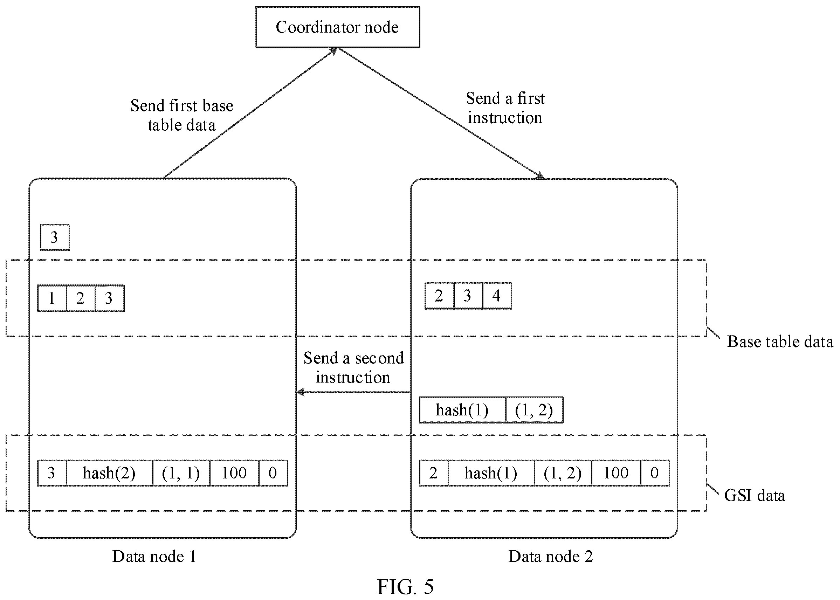

In conclusion, an example of the data query method may be shown in FIG. 5.

Optionally, the data node 2 may further send the first GSI data to the data node 1. It may be understood that a TABLE ACCESS BY INDEX ROWID query method for the base table data performed based on the distribution manner such as range distribution or list distribution is consistent with the TABLE ACCESS BY INDEX ROWID query method for the base table data performed based on a hash distribution. Details are not described herein again. A difference lies in that logical values of distribution keys of base table data stored in the GSI-t1 are different.

In a second example, the distribution manner of the base table data is a hash distribution manner, and the partitioning manner of the base table data is a hash partitioning manner.

It is assumed that Table 3 is a base table t2. The base table t2 may include a sum of data in columns a, b, c, and d. The column a represents a distribution key of the base table data; and the column d is used to store a partition key of the base table data, and the partition key of the base table data indicates a storage unit corresponding to the base table data.

**Table 3: Data and a basic structure of the base table t2**

| a | b | c | d |
|---|---|---|---|
| 1 | 2 | 3 | 10000 |
| 2 | 3 | 4 | 10001 |

A GSI (which may be referred to as GSI-t2) is created in the column b of the base table t2, and data and a structure of the GSI-t2 may be described in Table 4.

**Table 4: Data and a basic structure of the GSI-t2**

| b | Hash value 1 | Location information | Hash value 2 | Transaction information 1 | Transaction information 2 |
|---|---|---|---|---|---|
| 3 | hash(2) | (1, 1) | hash(10001) | 100 | 0 |
| 2 | hash(1) | (1, 2) | hash(10000) | 100 | 0 |

In Table 4, the column b may be an index key of the GSI-t2 and a distribution key of the GSI-t2, the hash value 1 may be a logical value of the distribution key of the base table data corresponding to the GSI-t2 data, and the hash value 2 may be a logical value of the partition key of the base table data corresponding to the GSI-t2 data. The location information indicates a location of the base table data on a corresponding data node.

In this embodiment, data in the base table t2 may be distributed to each data node based on the hash value of the distribution key of the base table data. For example, base table data (1, 2, 3, 10000) may be distributed to a data node 1, and base table data (2, 3, 4, 10001) may be distributed to a data node 2.

The GSI-t2 data may be distributed to each data node based on the hash value of the distribution key of the GSI data. For example, GSI-t2 data (3, hash(2), (1, 1), hash(10001), 100, 0) may be distributed to the data node 1, and GSI-t2 data (2, hash(1), (1, 2), hash(10000), 100, 0) may be distributed to the data node 2.

It may be understood that Table 3 and Table 4 are merely two simple examples. In actual application, the distribution key of the base table data in the base table t2 may be a character string or any other data type that can be used to calculate the hash value.

It is assumed that the query instruction entered by the user into the client is SELECT c FROM t2 WHERE b = 2, and the coordinator node may determine, according to the query instruction, to use the TABLE ACCESS BY INDEX ROWID query. The coordinator node may further determine, according to the query instruction, that a data node meeting the first query condition is the data node 2. The first query condition is b = 2, and the data required by the user is data with b = 2 in the column c in the base table data.

In this example, the data node 2 may be equivalent to the first data node in the embodiment in FIG. 3 or FIG. 4, and the data node 1 may be equivalent to the second data node in the embodiment in FIG. 3 or FIG. 4.

In this example, the first GSI data may include hash(1), (1, 2), and hash(10000). The data node 2 may determine, based on hash(1), that the base table data meeting b = 2 is stored on the data node 1, and the data node 2 may determine, based on (1, 2), a storage location that is of the base table data meeting b = 2 and that is on the data node 1. The data node 2 may determine, based on hash(10000), a storage unit that is of the base table data meeting b = 2 and that is on the data node 1.

In this example, the data node 2 may send the second instruction to the data node 1. After receiving the second instruction, the data node 1 may determine the first base table data according to the second instruction, and send the first base table data to the coordinator node. The first base table data includes the data required by the user.

In this example, the first base table data is 3.

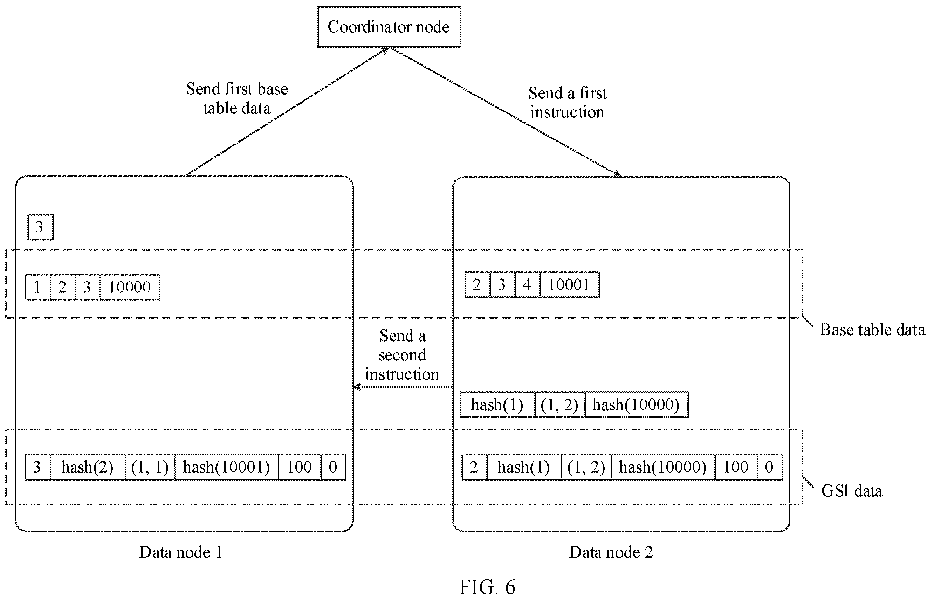

An example of the data query method may be shown in FIG. 6. Optionally, the data node 2 may further send the first GSI data to the data node 1.

In a third example, the distribution manner of the base table data is a range distribution manner, and the partitioning manner of the base table data is a range partitioning manner.

It is assumed that Table 5 is a base table t3. The base table t3 may include data in columns a, b, c, and d. The column a represents a distribution key of the base table data; and the column d is used to store a partition key of the base table data, and the partition key of the base table data indicates a storage unit corresponding to the base table data.

**Table 5: Data and a basic structure of the base table t3**

| a | b | c | d |
|---|---|---|---|
| 1 | 2 | 3 | 10000 |
| 2 | 3 | 4 | 10001 |

A GSI (which may be referred to as GSI-t3) is created in the column b of the base table t3, and data and a structure of the GSI-t3 may be described in Table 6.

**Table 6: Data and a basic structure of the GSI-t3**

| b | Range 1 | Location information | Range 2 | Transaction information 1 | Transaction information 2 |
|---|---|---|---|---|---|
| 3 | range(2) | (1, 1) | range(10001) | 100 | 0 |
| 2 | range(1) | (1, 2) | range(10000) | 100 | 0 |

In Table 6, the column b may be an index key of the GSI-t3 and a distribution key of the GSI-t3, the range 1 may be a logical value of the distribution key of the base table data corresponding to the GSI-t3 data, and the range 2 may be a logical value of the partition key of the base table data corresponding to the GSI-t3 data. The location information indicates a location of the base table data on a corresponding data node.

In this embodiment, data in the base table t3 may be distributed to each data node based on the range of the distribution key of the base table data. For example, base table data (1, 2, 3, 10000) may be distributed to a data node 1, and base table data (2, 3, 4, 10001) may be distributed to a data node 2.

The GSI-t3 data may be distributed to each data node based on the range of the distribution key of the GSI data. For example, GSI-t3 data (3, range(2), (1, 1), range(10001), 100, 0) may be distributed to the data node 1, and GSI-t3 data (2, range(1), (1, 2), range(10000), 100, 0) may be distributed to the data node 2.

It may be understood that Table 5 and Table 6 are merely two simple examples. In actual application, the distribution key of the base table data in the base table t3 may be other data types such as a character string.

It is assumed that the query instruction entered by the user into the client is SELECT c FROM t3 WHERE b = 2, and the coordinator node may determine, according to the query instruction, to use the TABLE ACCESS BY INDEX ROWID query. The coordinator node may further determine, according to the query instruction, that a data node meeting the first query condition is the data node 2. The first query condition is b = 2, and the data required by the user is data with b = 2 in the column c in the base table data.

In this example, the data node 2 may be equivalent to the first data node in the embodiment in FIG. 3 or FIG. 4, and the data node 1 may be equivalent to the second data node in the embodiment in FIG. 3 or FIG. 4.

In this example, the first GSI data may include range(1), (1, 2), and range(10000). The data node 2 may determine, based on range(1), that the base table data meeting b = 2 is stored on the data node 1, and the data node 2 may determine, based on (1, 2), a storage location that is of the base table data meeting b = 2 and that is on the data node 1. The data node 2 may determine, based on range(10000), a storage unit that is of the base table data meeting b = 2 and that is on the data node 1.

In this example, the data node 2 may send the second instruction to the data node 1. After receiving the second instruction, the data node 1 may determine the first base table data according to the second instruction, and send the first base table data to the coordinator node. The first base table data includes the data required by the user.

In this example, the first base table data is 3.

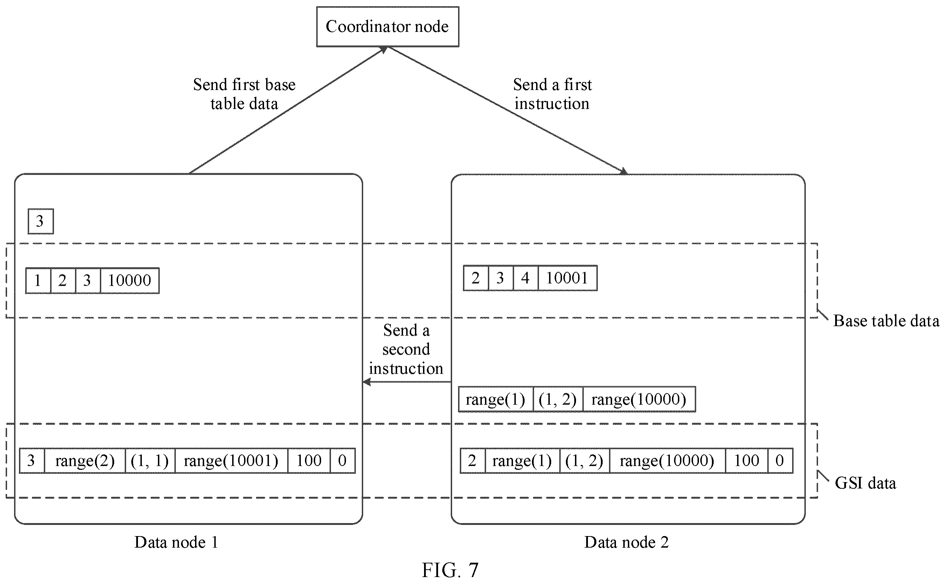

In conclusion, an example of the data query method may be shown in FIG. 7.

Optionally, the data node 2 may further send the first GSI data to the data node 1.

In a fourth example, the distribution manner of the base table data is a list distribution manner, and the partitioning manner of the base table data is a list partitioning manner.

It is assumed that Table 7 is a base table t4. The base table t4 may include data in columns a, b, c, and d. The column a represents a distribution key of the base table data; and the column d is used to store a partition key of the base table data, and the partition key of the base table data indicates a storage unit corresponding to the base table data.

**Table 7: Data and a basic structure of the base table t4**

| a | b | c | d |
|---|---|---|---|
| 1 | 2 | 3 | 10000 |
| 2 | 3 | 4 | 10001 |

A GSI (which may be referred to as GSI-t4) is created in the column b of the base table t4, and data and a structure of the GSI-t4 may be described in Table 8.

**Table 8: Data and a basic structure of the GSI-t4**

| b | List mapping value 1 | Location information | List mapping value 2 | Transaction information 1 | Transaction information 2 |
|---|---|---|---|---|---|
| 3 | list(2) | (1, 1) | list(10001) | 100 | 0 |
| 2 | list(1) | (1, 2) | list(10000) | 100 | 0 |

In Table 8, the column b may be an index key of the GSI-t4 and a distribution key of the GSI-t4, the list mapping value 1 may be a logical value of the distribution key of the base table data corresponding to the GSI-t4 data, and the list mapping value 2 may be a logical value of the partition key of the base table data corresponding to the GSI-t4 data. The location information indicates a location of the base table data on a corresponding data node.

In this embodiment, data in the base table t4 may be distributed to each data node based on the list mapping value of the distribution key of the base table data. For example, base table data (1, 2, 3, 10000) may be distributed to a data node 1, and base table data (2, 3, 4, 10001) may be distributed to a data node 2.

The GSI-t4 data may be distributed to each data node based on the list mapping value of the distribution key of the GSI data. For example, GSI-t4 data (3, list(2), (1, 1), list(10001), 100, 0) may be distributed to the data node 1, and GSI-t4 data (2, list(1), (1, 2), list(10000), 100, 0) may be distributed to the data node 2.

It may be understood that Table 7 and Table 8 are merely two simple examples. In actual application, the distribution key of the base table data in the base table t4 may be other data types such as a character string.

It is assumed that the query instruction entered by the user into the client is SELECT c FROM t4 WHERE b = 2, and the coordinator node may determine, according to the query instruction, to use the TABLE ACCESS BY INDEX ROWID query. The coordinator node may further determine, according to the query instruction, that a data node meeting the first query condition is the data node 2. The first query condition is b = 2, and the data required by the user is data with b = 2 in the column c in the base table data.

In this example, the data node 2 may be equivalent to the first data node in the embodiment in FIG. 3 or FIG. 4, and the data node 1 may be equivalent to the second data node in the embodiment in FIG. 3 or FIG. 4.

In this example, the first GSI data may include list(1), (1, 2), and list(10000). The data node 2 may determine, based on list(1), that the base table data meeting b = 2 is stored on the data node 1, and the data node 2 may determine, based on (1, 2), a storage location that is of the base table data meeting b = 2 and that is on the data node 1. The data node 2 may determine, based on list(10000), a storage unit that is of the base table data meeting b = 2 and that is on the data node 1.

In this example, the data node 2 may send the second instruction to the data node 1. After receiving the second instruction, the data node 1 may determine the first base table data according to the second instruction, and send the first base table data to the coordinator node. The first base table data includes the data required by the user.

In this example, the first base table data is 3.

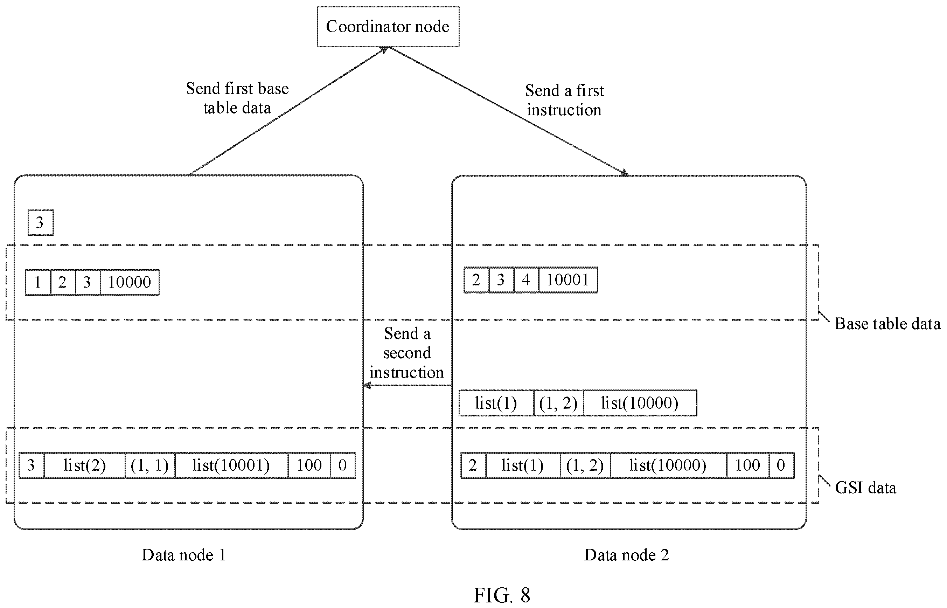

In conclusion, an example of the data query method may be shown in FIG. 8.

Optionally, the data node 2 may further send the first GSI data to the data node 1.

In a fifth example, the distribution manner of the base table data is a hash distribution manner, and the partitioning manner of the base table data is a range partitioning manner.

It is assumed that Table 9 is a base table t5. The base table t5 may include data in columns a, b, c, and d. The column a represents a distribution key of the base table data; and the column d is used to store a partition key of the base table data, and the partition key of the base table data indicates a storage unit corresponding to the base table data.

**Table 9: Data and a basic structure of the base table t5**

| a | b | c | d |
|---|---|---|---|
| 1 | 2 | 3 | 10000 |
| 2 | 3 | 4 | 10001 |

A GSI (which may be referred to as GSI-t5) is created in the column b of the base table t5, and data and a structure of the GSI-t5 may be described in Table 10.

**Table 10: Data and a basic structure of the GSI-t5**

| b | Hash value | Location information | Range value | Transaction information 1 | Transaction information 2 |
|---|---|---|---|---|---|
| 3 | hash(2) | (1, 1) | range(10001) | 100 | 0 |
| 2 | hash(1) | (1, 2) | range(10000) | 100 | 0 |

In Table 10, the column b may be an index key of the GSI-t5 and a distribution key of the GSI-t5, and the hash value may be a logical value of the distribution key of the base table data corresponding to the GSI-t5 data. The location information indicates a location of the base table data on a corresponding data node. The partition key indicates a storage unit of the base table data on the data node.

In this embodiment, data in the base table t5 may be distributed to each data node based on the list mapping value of the distribution key of the base table data. For example, base table data (1, 2, 3, 10000) may be distributed to a data node 1, and base table data (2, 3, 4, 10001) may be distributed to a data node 2.

The GSI-t5 data may be distributed to each data node based on the list mapping value of the distribution key of the GSI data. For example, GSI-t5 data (3, hash(2), (1, 1), range(10001), 100, 0) may be distributed to the data node 1, and GSI-t4 data (2, hash(1), (1, 2), range(10000), 100, 0) may be distributed to the data node 2.

It may be understood that Table 9 and Table 10 are merely two simple examples. In actual application, the distribution key of the base table data in the base table t5 may be a character string or any other data type that can be used to calculate the hash value.

It is assumed that the query instruction entered by the user into the client is SELECT c FROM t5 WHERE b = 2, and the coordinator node may determine, according to the query instruction, to use the TABLE ACCESS BY INDEX ROWID query. The coordinator node may further determine, according to the query instruction, that a data node meeting the first query condition is the data node 2. The first query condition is b = 2, and the data required by the user is data with b = 2 in the column c in the base table data.

In this example, the data node 2 may be equivalent to the first data node in the embodiment in FIG. 3 or FIG. 4, and the data node 1 may be equivalent to the second data node in the embodiment in FIG. 3 or FIG. 4.

In this example, the first GSI data may include hash(1), (1, 2), and range(10000). The data node 2 may determine, based on hash(1), that the base table data meeting b = 2 is stored on the data node 1, and the data node 2 may determine, based on (1, 2), a storage location that is of the base table data meeting b = 2 and that is on the data node 1. The data node 2 may determine, based on range(10000), a storage unit that is of the base table data meeting b = 2 and that is on the data node 1.

In this example, the data node 2 may send the second instruction to the data node 1. After receiving the second instruction, the data node 1 may determine the first base table data according to the second instruction, and send the first base table data to the coordinator node. The first base table data includes the data required by the user.

In this example, the first base table data is 3.

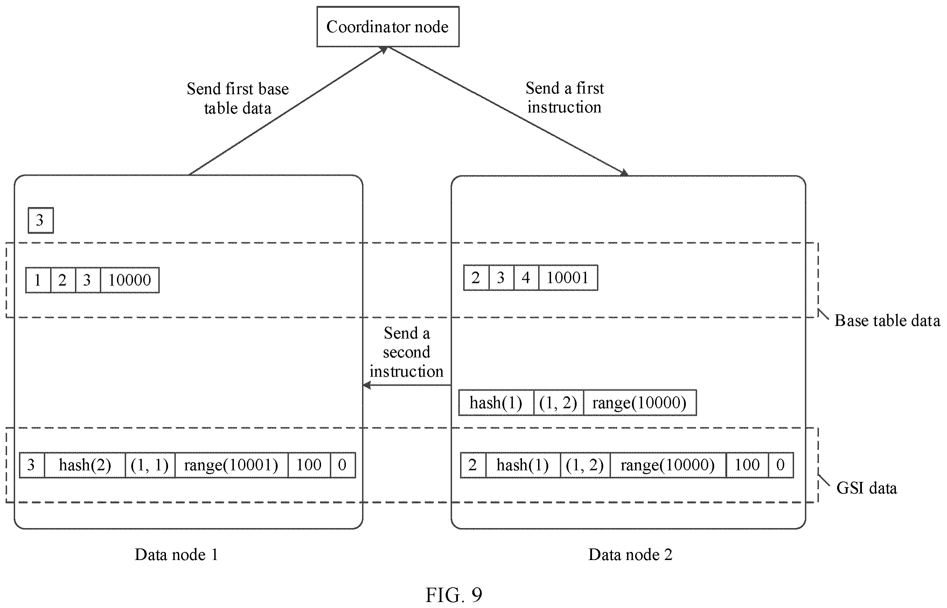

In conclusion, an example of the data query method may be shown in FIG. 9.

Optionally, the data node 2 may further send the first GSI data to the data node 1.

It may be understood that this application provides only five examples of performing the TABLE ACCESS BY INDEX ROWID query based on the distribution manner and the partitioning manner. The distribution manner and the partitioning manner of the base table data may be randomly combined. Details are not described in this application.

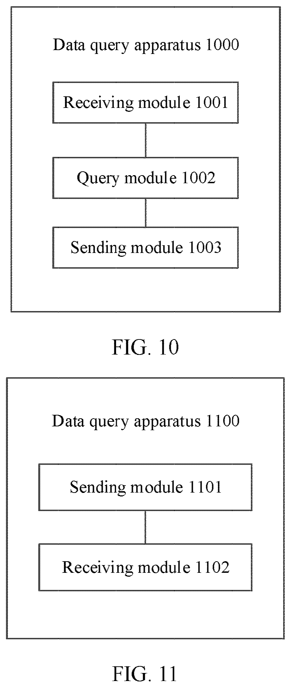

FIG. 10 is a diagram of a structure of a data query apparatus according to an embodiment of this application. As shown in FIG. 10, the data query apparatus 1000 may include a receiving module 1001, a query module 1002, and a sending module 1003. The data query apparatus 1000 may be used on a first data node.

In a first example, the data query apparatus 1000 may be configured to implement the data query method in the embodiment shown in FIG. 3. The receiving module 1001 may be configured to perform a receiving step in S301, the query module 1002 may be configured to perform S302, and the sending module 1003 may be configured to perform a sending step in S303.

In a second example, the data query apparatus 1000 may be further configured to implement the data query method in the embodiment shown in FIG. 4. The receiving module 1001 may be configured to perform a receiving step in S401, the query module 1002 may be configured to perform S402, and the sending module 1003 may be configured to perform a sending step in S403.

FIG. 11 is a diagram of a structure of a data query apparatus according to another embodiment of this application. As shown in FIG. 11, the data query apparatus 1100 may include a sending module 1101 and a receiving module 1102. The data query apparatus 1100 may be used on a coordinator node.

In a first example, the data query apparatus 1100 may be configured to implement the data query method in the embodiment shown in FIG. 3. The sending module 1101 may be configured to perform a sending step in S301, and the receiving module 1102 may be configured to perform a receiving step in S303.

In a second example, the data query apparatus 1100 may be further configured to implement the data query method in the embodiment shown in FIG. 4. The sending module 1101 may be configured to perform sending steps in S401 and S404, and the receiving module 1102 may be configured to perform a receiving step in S403.

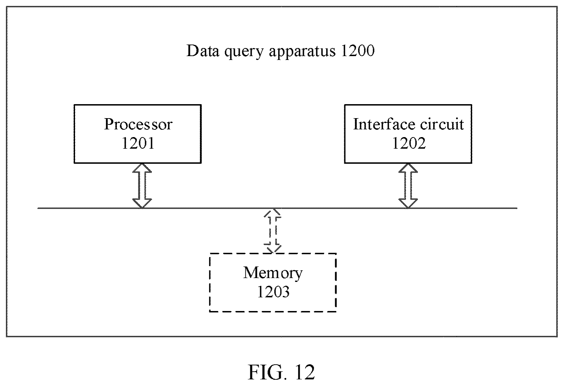

FIG. 12 is a diagram of a structure of a data query apparatus according to still another embodiment of this application. As shown in FIG. 12, the data query apparatus 1200 includes a processor 1201 and an interface circuit 1202. The processor 1201 and the interface circuit 1202 are coupled to each other. It may be understood that the interface circuit 1202 may be a transceiver or an input/output interface. Optionally, the data query apparatus 1200 may further include a memory 1203, configured to store instructions executed by the processor 1201, or store input data required by the processor 1201 to run instructions, or store data generated after the processor 1201 runs instructions.

In a first example, the processor 1201 is configured to implement a function of the query module 1002, and the interface circuit 1202 is configured to implement functions of the receiving module 1001 and the sending module 1003.

In a second example, the interface circuit 1202 is configured to implement functions of the sending module 1101 and the receiving module 1102.

The data query apparatus 1200 may be a data query device, or may be a chip used in a data query device.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible to a computer, or a data storage device, such as a server or a data center, integrating one or more usable media. The usable medium may be a magnetic medium, for example, a floppy disk, a hard disk, or a magnetic tape, or may be an optical medium, for example, a digital video disc, or may be a semiconductor medium, for example, a solid-state drive.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A data query method, wherein the method is applied to a first data node, the first data node stores global secondary index GSI data, the GSI data comprises a first index and a first logical value, the first index is an index of base table data, the first logical value is a logical value of a distribution key of the base table data, and the method comprises:
receiving a first instruction from a coordinator node, wherein the first instruction is used to request to query, in a TABLE ACCESS BY INDEX ROWID query manner, base table data meeting a first query condition;
performing a query according to the first instruction to obtain first GSI data, wherein a first index in the first GSI data meets the first query condition; and
sending a second instruction, wherein the second instruction indicates that the base table data meeting the first query condition is stored on a second data node, and a logical value of a distribution key of the base table data stored on the second data node is equal to a first logical value in the first GSI data.

2. The method according to claim 1, wherein the logical value of the distribution key of the base table data comprises any one of the following: a hash value mapping value of the distribution key of the base table data, a range mapping value of the distribution key of the base table data, and a list mapping value of the distribution key of the base table data.

3. The method according to claim 1 or 2, sending the second instruction comprises:
sending the second instruction to the second data node.

4. The method according to claim 1 or 2, sending the second instruction comprises:
sending the second instruction to the coordinator node.

5. The method according to any one of claims 1 to 4, wherein the GSI data further comprises a second logical value, the second logical value is a logical value of a partition key of the base table data, and the logical value of the partition key of the base table data comprises any one of the following: a hash value mapping value of the partition key of the base table data, a range mapping value of the partition key of the base table data, and a list mapping value of the partition key of the base table data; and
the logical value of the partition key of the base table data stored on the second data node is equal to a second logical value in the first GSI data.

6. A data query method, wherein the method is applied to a coordinator node, and the method comprises:
sending a first instruction to at least one data node, wherein each of the at least one data node stores global secondary index GSI data, the GSI data comprises a first index and a first logical value, the first index is an index of base table data, the first logical value is a logical value of a distribution key of the base table data, and the first instruction is used to request to query, in a TABLE ACCESS BY INDEX ROWID query manner, base table data meeting a first query condition; and
receiving a second instruction from a first data node of the at least one data node, wherein the second instruction indicates that the base table data meeting the first query condition is stored on a second data node, a logical value of a distribution key of the base table data stored on the second data node is equal to a first logical value in first GSI data, and a first index in the first GSI data meets the first query condition.

7. The method according to claim 6, wherein the logical value of the distribution key of the base table data comprises any one of the following: a hash value mapping value of the distribution key of the base table data, a range mapping value of the distribution key of the base table data, and a list mapping value of the distribution key of the base table data.

8. The method according to claim 6 or 7, wherein the GSI data further comprises a second logical value, the second logical value is a logical value of a partition key of the base table data, and the logical value of the partition key of the base table data comprises any one of the following: a hash value mapping value of the partition key of the base table data, a range mapping value of the partition key of the base table data, and a list mapping value of the partition key of the base table data; and
the logical value of the partition key of the base table data stored on the second data node is equal to a second logical value in the first GSI data.

9. A data query apparatus, comprising a functional module configured to implement the method according to any one of claims 1 to 5, or comprising a functional module configured to implement the method according to any one of claims 6 to 8.

10. A data query apparatus, comprising a memory and a processor, wherein
the memory is configured to store program instructions; and
the processor is configured to execute the program instructions in the memory to implement the method according to any one of claims 1 to 5, or is configured to execute the program instructions in the memory to implement the method according to any one of claims 6 to 8.

11. A communication system, comprising a data node and a coordinator node, wherein the data node is configured to implement the method according to any one of claims 1 to 5, and the coordinator node is configured to implement the method according to any one of claims 6 to 8.

12. A computer-readable storage medium, wherein the computer-readable storage medium stores program code to be executed by a computer, and the program code comprises instructions used to implement the method according to any one of claims 1 to 5 or claims 6 to 8.

13. A computer program product, wherein the computer program product comprises instructions used to implement the method according to any one of claims 1 to 5 or claims 6 to 8.
